# EUROPÄISCHE PATENTANMELDUNG

(11) **EP 3 663 171 A1**
(43) Veröffentlichungstag der Anmeldung: **10.06.2020**
(21) Anmeldenummer: 19212760.3
(22) Anmeldetag: 02.12.2019
(51) Int. Cl.: B62D 33/04

(54) **ISOLIERPANEEL, KOMPONENTE EINES FAHRZEUGAUFBAUS, FAHRZEUGAUFBAU, FAHRZEUG UND HERSTELLUNGSVERFAHREN**

(30) Priorität: 04.12.2018 DE 102018130816
(71) Anmelder: Kögel Trailer GmbH, 89349 Burtenbach (DE)
(72) Erfinder: PRÖBSTLE, Roman, 89359 Kötz (DE); RULEWSKI, Marcel, 86637 Zusamaltheim (DE); GRINBOLD, Matthias, 74541 Vellberg (DE); BIRLE, Günter, 86877 Walkertshofen (DE)
(74) Vertreter: Kilchert, Jochen

(57) **Zusammenfassung**

Die vorliegende Erfindung betrifft ein Isolierpaneel für einen Fahrzeugaufbau, insbesondere Kühlfahrzeugaufbau, mit wenigstens einer wärmedämmenden Kernschicht (10) und wenigstens einer Deckschicht (11) aus einem faserverstärkten Kunststoffmaterial, wobei die Kernschicht (10) eine Innenseite (12), eine Außenseite (13) und wenigstens zwei gegenüberliegende Schmalseiten (14) aufweist, wobei die Kernschicht (10) auf der Innenseite (12) und/oder auf der Außenseite (13) wenigstens zwei Absätze (15) umfasst, wobei jeweils ein Absatz (15) ausgehend von einer Schmalseite (14) ausgebildet ist, und wobei die Kernschicht (10), insbesondere im Bereich der Absätze (15), mit der Deckschicht (11) bedeckt ist.

## Beschreibung

Die Erfindung betrifft ein Isolierpaneel, eine Komponente eines Fahrzeugaufbaus, einen Fahrzeugaufbau, ein Fahrzeug und ein Verfahren zur Herstellung eines Isolierpaneels. Ein Isolierpaneel gemäß dem Oberbegriff des Patentanspruchs 1 ist beispielsweise aus der DE 10 2013 105 987 A1 bekannt.

Im Nutzfahrzeugbau werden üblicherweise Metalldeckplatten zur Herstellung von Isolierpaneelen verwendet, die parallel und mit einem Zwischenraum angeordnet werden. In den Zwischenraum wird eine Flüssigkeit eingebracht und zur Bildung einer Dämmschicht aufgeschäumt. Die Herstellung geschäumter Isolierpaneele ist aufwendig und kostenintensiv, da der Schaum die im Zwischenraum enthaltene Luft verdrängen und diesen ausfüllen muss. Überdies bestehen Einschränkungen hinsichtlich der Form und Größe der so gefertigten Isolierpaneele. Eine weitere Möglichkeit zur Herstellung von Isolierpaneelen sind geklebte Paneele, bei denen vorgefertigte Dämmschichten und Decklagen verklebt werden. Auch hier unterliegen die Form und Größe der Isolierpaneele Einschränkungen.

Aus der eingangs genannten DE 10 2013 105 987 A1 (Anmelderin) ist bspw. ist ein wärmeisolierter Fahrzeugaufbau mit einer Bodenlage gezeigt. Die Bodenlage bildet eine Sandwichplatte mit einer mittleren Schicht aus einem Schaummaterial zwei äußeren Deckschichten, die aus einem faserverstärkten Kunststoffmaterial gebildet sind. Zur Verbindung der Bodenlage mit einer Seitenwand ist an einer der äußeren Schichten und der Seitenwand ein Außenwinkel bzw. ein außenseitiger Beschlag vorgesehen. Der Beschlag liegt dabei außen auf der Seitenwand und der Bodenlage auf.

Dies hat den Nachteil, dass bei Einhaltung einer Gesamtbreite bzw. -höhe des Fahrzeugaufbaus eine Laderaumbreite sowie eine Laderaumhöhe des Fahrzeugaufbaus verkleinert ist. Ferner wird im Fall einer erforderlichen Erhöhung der Isolierstärke der Seitenwände bzw. Decke und/oder des Bodens ein Laderaum des Fahrzeugaufbaus weiter verkleinert. Des Weiteren ist nachteilig, dass bei Fahrzeugaufbauten mit jeweils unterschiedlichen Seitenwandstärken die Maße der Decken- bzw. Bodenpaneele an die Seitenwandstärken der unterschiedlichen Aufbautypen entsprechend angepassten werden müssen. Die Verwendung von Decken- bzw. Bodenpaneelen mit einheitlichen Breitenmaßen für verschiedene Aufbautypen ist somit nicht möglich.

Der Erfindung liegt daher die Aufgabe zu Grunde, ein Isolierpaneel für einen Fahrzeugaufbau, insbesondere Kühlfahrzeugaufbau, mit einer verbesserten Form anzugeben, das den Einsatz von Decken- und Bodenpaneele mit einem einheitlichen Breitenmaß für Fahrzeugaufbautypen mit unterschiedlichen Seitenwandstärken ermöglicht. Der Erfindung liegt ferner die Aufgabe zu Grunde, eine Komponente eines Fahrzeugaufbaus, einen Fahrzeugaufbau, ein Fahrzeug und ein Herstellungsverfahren für Isolierpaneele anzugeben.

Erfindungsgemäß wird diese Aufgabe im Hinblick auf das Isolierpaneel durch den Gegenstand des Anspruchs 1 gelöst. Hinsichtlich der Komponente eines Fahrzeugaufbaus, des Fahrzeugaufbaus, des Fahrzeugs und des Verfahrens zur Herstellung eines Isolierpaneels wird die vorstehend genannte Aufgabe jeweils durch den Gegenstand des Anspruchs 9 (Komponente), des Anspruchs 10 (Fahrzeugaufbau), des Anspruchs 14 (Fahrzeug) und des Anspruchs 15 (Verfahren) gelöst.

Konkret wird die Aufgabe durch ein Isolierpaneel für einen Fahrzeugaufbau, insbesondere Kühlfahrzeugaufbau, mit wenigstens einer wärmedämmenden Kernschicht und wenigstens einer Deckschicht aus einem faserverstärkten Kunststoffmaterial gelöst. Die Kernschicht weist eine Innenseite, eine Außenseite und wenigstens zwei gegenüberliegende Schmalseiten auf. Die Kernschicht umfasst auf der Innenseite und/oder auf der Außenseite wenigstens zwei Absätze, wobei jeweils ein Absatz ausgehend von einer Schmalseite ausgebildet ist. Die Kernschicht ist, insbesondere im Bereich der Absätze, mit der Deckschicht bedeckt.

Die Erfindung hat verschiedene Vorteile:
Durch die Ausbildung der Deckschichten aus faserverstärktem Kunststoffmaterial weist das Isolierpaneel im Unterschied zu herkömmlichen Isolierpaneelen mit metallischen Deckschichten vorteilhaft ein sehr geringes Gewicht auf. In Einbaulage ist die Innenseite der Kernschicht dem Laderaum eines Fahrzeugaufbaus zugewandt. Des Weiteren sind die Innenseite und die Außenseite der Kernschicht einander gegenüber vorgesehen. Die Schmalseiten entsprechen außenliegenden Stirnseiten des Isolierpaneels. Mit anderen Worten sind die Schmalseiten sind zwischen der Innenseite und der Außenseite an der Kernschicht stirnseitig vorgesehen. Die Schmalseiten entsprechen der Tiefe der Kernschicht.

Generell weisen Fahrzeugaufbauten, insbesondere Kühlfahrzeugaufbauten einen Boden, zwei Seitenwände, eine Decke sowie eine Vorderwand und wenigstens eine Hecktüre auf, durch die ein Laderaum zugänglich ist. Das erfindungsgemäße Isolierpaneel ist vorteilhaft vielseitig einsetzbar. Durch die Verwendung von wenigstens einem erfindungsgemäßen Isolierpaneel als Seitenwand können vorteilhaft Decken- und Bodenpaneele mit einem einheitlichen Breitenmaß für Fahrzeugaufbautypen mit jeweils unterschiedlichen Seitenwandstärken verwendet werden. Mit anderen Worten ist das einheitliche Breitenmaß der Decken- und Bodenpaneele vorteilhaft unabhängig von einer Isolierstärke der Seitenwände. Das Breitenmaß der Paneele entspricht im Wesentlichen dem Abstand zwischen den beiden Seitenwänden. Zur Ermöglichung eines Einheitsbreitenmaßes der Decken- und Bodenpaneele sind die Absätze vorteilhaft auf der Innenseite und/oder auf der Außenseite der Kernschicht ausgebildet.

Durch die Ausbildung jeweils eines Absatzes an jeweils einer der Schmalseiten innen auf der Kernschicht sind ferner vorteilhaft erforderliche Eckwinkel zur Verbindung mit wenigstens einem Deckenpaneel und/oder wenigstens einem Bodenpaneel versenkbar. Mit anderen Worten können die Eckwinkel in den Absätzen derart angeordnet werden, dass die Eckwinkel zumindest flächenbündig mit einer Außenfläche des Isolierpaneels abschließen. Vorteilhaft werden durch die Absätze überstehende Störkanten verhindert und somit ein nutzbares Laderaumvolumen erhöht.

Zusätzlich oder alternativ sind auf der Außenseite der Kernschicht vorteilhaft zwei Absätze vorgesehen, in die bspw. Blenden oder Abdeckwinkel vorgesehen werden können. Vorteilhaft werden durch die außen ausgebildeten Absätze ebenso überstehende Kanten und somit bspw. außen auf der Decke eine Ansammlung von Wasser und Schmutz verhindert. Mit anderen Worten kann bei Regen das anfallende Wasser durch die vertieften Blenden bzw. Abdeckwinkel einfach ablaufen. Besonders vorteilhaft wird dadurch im Winter die Bildung von Eis verhindert.

Bevorzugte Ausführungsformen der Erfindung sind in den Unteransprüchen angegeben.

Bei einer bevorzugten Ausführungsform bilden die Absätze in Einbaulage einen oberen Absatz und einen unteren Absatz, die in einer Vertikalrichtung an der Kernschicht einander gegenüber vorgesehen sind und die in Längsrichtung des Isolierpaneels verlaufen. Die Absätze können dabei über die gesamte Länge des Isolierpaneels verlaufen. Dies hat den Vorteil, dass beim Einsatz des Isolierpaneels als Seitenwand bspw. innenseitige Eckwinkel bzw. außenseitige Blenden oder Abdeckwinkel an beliebiger Position entlang des Isolierpaneels angeordnet werden können. Ferner wird durch die oberen und unteren Absätze vorteilhaft ein einheitliches Breitenmaß von Decken- und Bodenpaneelen für Aufbautypen mit unterschiedliche Seitenwand-Isolierstärken ermöglicht.

Bei einer weiteren bevorzugten Ausführungsform weisen die Absätze auf der Innenseite und/oder die Absätze auf der Außenseite eine gleiche Tiefe auf. Dies hat den Vorteil, dass das Isolierpaneel einfach und kostengünstig herstellbar ist.

Vorzugsweise ist die Deckschicht im Bereich des jeweiligen Absatzes formfolgend ausgebildet. Mit anderen Worten ist die Deckschicht vorzugsweise an die Form der Absätze angepasst bzw. anliegend aufgebracht. Die Deckschicht kann den jeweiligen Absatz formabbildend bedecken.

Bei einer bevorzugten Ausführungsform weist die Deckschicht die Absätze vollständig bedeckt und an der gesamten Kernschicht eine einheitliche Schichtdicke auf. Dies hat den Vorteil, dass bei einer Herstellung das faserverstärkte Kunststoffmaterial gleichmäßig auf die Kernschicht aufgebracht werden kann, wodurch das Verfahren zur Herstellung vereinfacht wird. Ferner werden dadurch Kosten eingespart.

Die Absätze können durch die Deckschicht auch teilweise bedeckt sein. Die Absätze können Ausnehmungen und/oder Durchgangsöffnungen aufweisen. Die Ausnehmungen und/oder die Durchgangsöffnungen können durch die Deckschicht zumindest teilweise ausgefüllt sein. Zusätzlich oder alternativ kann die Kernschicht außerhalb der Absätze wenigstens eine Ausnehmung und/oder eine Durchgangsöffnung aufweisen. Die Deckschicht der Außenseite kann mit der Deckschicht der Innenseite durch die Durchgangsöffnung hindurch stoffschlüssig verbunden sein. Dies hat den Vorteil, dass die Kernschicht seitlich stabilisiert und ein Ablösen der beidseitig aufgebrachten Deckschicht verhindert wird.

Bei einer weiteren bevorzugten Ausführungsform ist wenigstens ein Befestigungsmittel und/oder wenigstens eine Blende im Bereich des Absatzes vorgesehen. Das Befestigungsmittel kann durch einen Eckwinkel zur Verbindung mit einem Deckenpaneel und/oder einem Bodenpaneel gebildet sein. Ferner kann die Blende auch durch einen Abdeckwinkel gebildet sein. Hierbei ist vorteilhaft, dass die Isolierpaneele der Seitenwände mit den Paneelen der Decke und/oder des Bodens fest verbindbar sind. Ferner wird die Verbindungstelle der Paneele vorteilhaft durch die Blenden bzw. Abdeckwinkel geschützt.

Vorzugsweise schließt das Befestigungsmittel und/oder die Blende mit einer Außenfläche des Isolierpaneels zumindest teilweise flächenbündig ab. Weiter vorzugsweise ist das Befestigungsmittel und/oder die Blende von einer Außenfläche des Isolierpaneels ausgehend nach innen versetzt angeordnet. Vorteilhaft werden durch die Absätze überstehende Störkanten verhindert und somit ein nutzbares Laderaumvolumen erhöht. Ferner vorteilhaft werden durch fehlende überstehende Kanten außen auf der Decke des Fahrzeugaufbaus eine Ansammlung von Wasser verhindert.

Ein nebengeordneter Aspekt der Erfindung betrifft eine Komponente eines Fahrzeugaufbaus, insbesondere Kühlfahrzeugaufbaus, umfassend eine Hecktüre und/oder eine Seitenwand und/oder eine Vorderwand und/oder eine Decke und/oder ein Boden jeweils mit wenigstens einem erfindungsgemäßen Isolierpaneel. Besonders bevorzugt ist die gesamte Komponente aus einem oder mehreren erfindungsgemäßen Isolierpaneelen zusammengesetzt. Als Komponente kommen beispielsweise eine Seitenwand, d. h. die in Fahrtrichtung des Fahrzeugaufbaus sich erstreckende Längswand, und/oder eine Vorderwand und/oder eine Decke und/oder ein Boden und/oder eine oder beide Hecktüren des Fahrzeugaufbaus infrage. Es ist denkbar, dass Die Komponenten des Fahrzeugaufbaus bilden sofern Außenteile des Fahrzeugaufbaus, als diese den Ladeinnenraum von der Umgebung wärmedämmend isolieren.

Ein weiterer nebengeordneter Aspekt der Erfindung betrifft einen Fahrzeugaufbau, insbesondere Kühlfahrzeugaufbau, mit wenigstens zwei Seitenwänden, einem Boden und einer Decke, wobei wenigstens eine der Seitenwände und/oder der Boden und/oder die Decke durch wenigstens ein erfindungsgemäßes Isolierpaneel gebildet sind. Es ist möglich, dass der Fahrzeugaufbau teilweise oder vollständig aus erfindungsgemäßen Isolierpaneelen aufgebaut ist.

Bei einer besonders bevorzugten Ausführungsform des Fahrzeugaufbaus ist die Decke durch wenigstens ein Deckenpaneel und der Boden durch wenigstens ein Bodenpaneel gebildet, wobei das Deckenpaneel und das Bodenpaneel bei gleichbleibender Gesamtbreite des Fahrzeugaufbaus unabhängig von einer Dicke der jeweiligen Seitenwand ein gleiches Breitenmaß aufweisen.

Bei einer bevorzugten Ausführungsform des Fahrzeugaufbaus ist wenigstens ein Eckbereich zwischen dem Boden und der jeweiligen Seitenwand und/oder der Decke und der jeweiligen Seitenwand ausgebildet, in dem wenigstens ein Befestigungsmittel und/oder wenigstens eine Blende angeordnet ist, das/die mit einer Außenfläche des jeweiligen Isolierpaneels zumindest teilweise flächenbündig abschließt.

Bei einer weiteren bevorzugten Ausführungsform des Fahrzeugaufbaus ist wenigstens ein Eckbereich zwischen dem Boden und der jeweiligen Seitenwand und/oder der Decke und der jeweiligen Seitenwand ausgebildet, in dem wenigstens ein Befestigungsmittel und/oder wenigstens eine Blende angeordnet ist, das/die von einer Außenfläche des jeweiligen Isolierpaneels ausgehend nach innen versetzt angeordnet ist.

Im Rahmen der Erfindung wird ferner ein Fahrzeug mit wenigstens einem erfindungsgemäßen Isolierpaneel offenbart und beansprucht. Bei dem Fahrzeug mit dem erfindungsgemäßen Isolierpaneel kann es sich beispielsweise um ein Kühlfahrzeug, insbesondere einen Sattelauflieger, der als Kühlfahrzeug (Kühlauflieger) ausgebildet ist, handeln.

Bei einem erfindungsgemäßen Verfahren zur Herstellung eines Isolierpaneels wird in einem ersten Schritt eine Kernschicht aus wenigstens einem wärmedämmenden, insbesondere geschäumten, Material bereitgestellt, wobei die Kernschicht an wenigstens einer Schmalseite wenigstens einen Absatz aufweist, der von der Schmalseite ausgehend ausgebildet ist. In einem zweiten Schritt wird eine Presse und/oder die Kernschicht und der Absatz mit einem faserverstärkten, insbesondere glasfaserverstärkten, Kunststoffmaterial zur Bildung wenigstens einer Deckschicht besprüht. In einem dritten Schritt wird die Kernschicht mit der Deckschicht verpresst, wobei der Absatz mit dem faserverstärkten Kunststoffmaterial bedeckt wird.

Bei einer bevorzugten Ausführungsform des erfindungsgemäßen Herstellungsverfahrens wird beim Verpressen im Bereich der Absätze eine einheitliche Schichtdicke der Deckschicht ausgebildet.

Zu den Vorteilen der Komponente, des Fahrzeugaufbaus, des Fahrzeugs und des Verfahrens zur Herstellung eines erfindungsgemäßen Isolierpaneels wird auf die im Zusammenhang mit dem Isolierpaneel erläuterten Vorteile verwiesen. Darüber hinaus können die Komponente, der Fahrzeugaufbau, das Fahrzeug und das Verfahren alternativ oder zusätzlich einzelne oder eine Kombination mehrerer zuvor in Bezug auf das Isolierpaneel genannte Merkmale aufweisen.

Die Erfindung wird nachstehend mit weiteren Einzelheiten unter Bezug auf die beigefügte Zeichnung näher erläutert. Die dargestellte Ausführungsform stellt ein Beispiel dar, wie das erfindungsgemäße Isolierpaneel ausgestaltet sein kann.

In dieser zeigt,

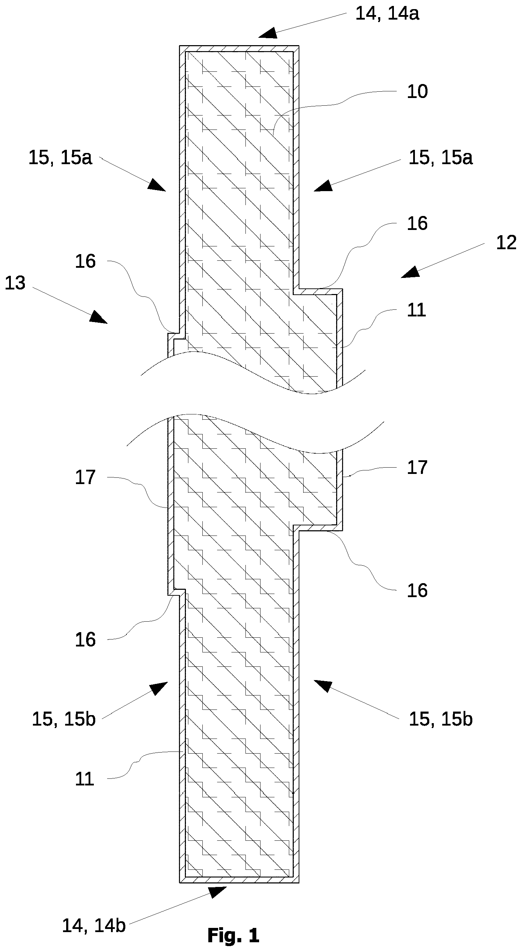

- Fig. 1: eine Querschnittsansicht eines Isolierpaneels nach einem erfindungsgemäßen Ausführungsbeispiel.

Gemäß Fig. 1 ist ein Isolierpaneel für einen Fahrzeugaufbau, insbesondere Kühlfahrzeugaufbau gezeigt. Das Isolierpaneel umfasst eine wärmedämmende Kernschicht 10 und eine Deckschicht 11 aus einem faserverstärkten Kunststoffmaterial. Die Kernschicht 10 ist durch die Deckschicht 11 ummantelt. Die Deckschicht 11 kann einseitig, doppelseitig bzw. auf mehreren Seiten der Kernschicht 10 ausgebildet sein. Die Deckschicht 11 kann die Kernschicht 10 vollständig ummanteln bzw. einkapseln. Auf die Deckschicht 11 wird später näher eingegangen.

Die Kernschicht 10 weist eine Innenseite 12, eine Außenseite 13 und insgesamt vier Schmalseiten 14 auf. Die Innenseite 12 ist im eingebauten Zustand einem nicht dargestellten Laderaum eines Fahrzeugaufbaus zugewandt. Die Außenseite 13 der Kernschicht 10 ist der Innenseite 12 gegenüber vorgesehen. Mit anderen Worten ist die Außenseite 13 im eingebauten Zustand dem Laderaum des Fahrzeugaufbaus abgewandt. Die Schmalseiten 14 entsprechen außenliegenden Stirnseiten des Isolierpaneels. Mit anderen Worten entsprechen die Schmalseiten 14 vier Paneelenden des Isolierpaneels. Jeweils zwei Schmalseiten 14 sind an der Kernschicht 10 einander gegenüberliegend vorgesehen.

In Fig. 1 ist das Isolierpaneel als Seitenwand gezeigt, wobei in Einbaulage die Kernschicht 10 eine oben angeordnete Schmalseite 14a und eine unten angeordnete Schmalseite 14b aufweist. Ferner weist die Kernschicht 10 zwei nicht dargestellte seitliche Schmalseiten auf. Die jeweilige Schmalseite 14 ist zwischen der Innenseite 12 und der Außenseite 13 an der Kernschicht 10 stirnseitig vorgesehen. Die Schmalseite 14 entspricht der Tiefe der Kernschicht 10. Die Kernschicht 10 ist im Wesentlichen quaderförmig ausgebildet. Die Kernschicht 10 kann auch einen mehreckigen Volumenkörper bilden. Alternativ kann die Kernschicht 10 auch durch abgerundete Kernschichtelemente 10 gebildet sein. Auf die Kernschicht 10 wird später näher eingegangen.

Die Kernschicht 10 umfasst mehrere Absätze 15, wobei zwei Absätze 15 auf der Innenseite 12 und zwei Absätze auf der Außenseite 13 ausgebildet sind. Die Absätze 15 der Innenseite 12 dienen bspw. zur Aufnahme von Inneneckwinkeln im Eckbereich einer Decke bzw. im Eckbereich eines Bodens des Fahrzeugaufbaus. Die Absätze 15 der Außenseite 13 dienen bspw. zur Aufnahme von Blenden oder Abdeckwinkeln im Eckbereich der Decke bzw. des Bodens des Fahrzeugaufbaus. Die Absätze 15 sind ausgehend von den Schmalseiten 14 ausgebildet. Mit anderen Worten sind die Absätze 15 zu den Schmalseiten 14 hin offen ausgebildet. Die Absätze 15 sind jeweils durch eine Kernschichtabtragung gebildet. Mit anderen Worten sind die Absätze 15 in der Kernschicht 10 ausgebildet, wobei die Absätze 15 zur jeweiligen Schmalseite 14 hin offen und zur Innenseite 12 oder zur Außenseite 13 hin offen ausgebildet sind.

Konkret sind zwei obere Absätze 15a an der oben angeordneten Schmalseite 14a und zwei untere Absätze 15b an der unten angeordneten Schmalseite 14b vorgesehen. Die Bezeichnung "oben" bzw. "unten" bezieht sich auf die Einbaulage des Isolierpaneels bei Verwendung als Seitenwand eines Fahrzeugaufbaus. Die Kernschicht 10 weist auf der Innenseite 12 und auf der Außenseite 13 jeweils einen oberen Absatz 15a und jeweils einen unteren Absatz 15b auf. Die Kernschicht 10 kann auch lediglich auf der Innenseite 12 und/oder auf der Außenseite 13 einen oberen Absatz 15a und einen unteren Absatz 15b aufweisen. Alternativ kann die Kernschicht 10 auf der Innenseite 12 und/oder der Außenseite 13 wenigstens einen oberen Absatz 15a und/oder wenigstens einen unteren Absatz 15b aufweisen.

Wie in Fig. 1 gezeigt ist, sind die Absätze 15a, 15b sind in Vertikalrichtung einander gegenüber vorgesehen und verlaufen in Längsrichtung des Isolierpaneels. Es ist denkbar, dass die Absätze 15a, 15b an den Schmalseiten 14a, 14b über die gesamte Länge des Isolierpaneels ausgebildet sind. Alternativ dazu können die Absätze 15a, 15b an den Schmalseiten 14a, 14b in Längsrichtung des Isolierpaneels abschnittsweise ausgebildet sein.

Die Absätze 15a, 15b der Innenseite 12 weisen eine gleiche Tiefe 16 auf. Die Absätze 15a, 15b können auch eine unterschiedliche Tiefe 16 aufweisen. Ebenso weisen die Absätze 15a, 15b der Außenseite 13 eine gleiche Tiefe 16 auf. Auch die Absätze 15a, 15b der Außenseite 13 können eine unterschiedliche Tiefe 16 aufweisen. Die Tiefe der Absätze 15a, 15b ist hierbei von der Innenseite 12 bzw. der Außenseite 13 ausgehend nach innen zu sehen.

Wie in Fig. 1 ersichtlich, weisen die Absätze 15a, 15b auf der Innenseite 12 der Kernschicht 10 eine größere Tiefe 16 als die Absätze 15a, 15b der Außenseite 13 auf. Es ist auch denkbar, dass die Absätze 15a, 15b der Innenseite 12 und der Außenseite 13 eine gleiche Tiefe aufweisen. Alternativ dazu können die Absätze 15a, 15b auf der Außenseite 13 eine größere Tiefe 16 als die Absätze 15a, 15b der Innenseite 12 aufweisen. Die Kernschicht 10 weist im Bereich des jeweiligen Absatzes 15 eine geringere Kernschichtdicke auf.

Ferner ist in Fig. 1 gezeigt, dass der obere Absatz 15a der Innenseite 12 ausgehend von der oben angeordneten Schmalseite 14a kürzer ausgebildet ist als der untere Absatz 15b ausgehend von der unten angeordneten Schmalseite 14b. Alternativ kann der obere Absatz 15a der Innenseite 12 ausgehend von der oben angeordneten Schmalseite 14a länger ausgebildet sein als der untere Absatz 15b ausgehend von der unten angeordneten Schmalseite 14b.

Die Absätze 15a, 15b können ausgehend von der jeweiligen Schmalseite 14a, 14b eine gleiche Länge aufweisen. Der obere Absatz 15a der Außenseite 13 ausgehend von der oben angeordneten Schmalseite 14a kann kürzer ausgebildet sein als der untere Absatz 15b ausgehend von der unten angeordneten Schmalseite 14b. Alternativ kann der obere Absatz 15a der Außenseite 13 ausgehend von der oben angeordneten Schmalseite 14a länger ausgebildet sein als der untere Absatz 15b ausgehend von der unten angeordneten Schmalseite 14b.

Generell kann die Kernschicht 10 aus zusammengesetzten Kernschichtelementen, insbesondere geschäumten Kernschichtblöcken, gebildet sein. Mit anderen Worten kann die Kernschicht 10 mehrteilig ausgebildet sein. Alternativ kann die Kernschicht 10 einstückig, insbesondere einteilig, ausgebildet sein. Mit anderen Worten kann die Kernschicht 10 durch ein einziges Kernschichtelement gebildet sein. Die Kernschicht kann gemäß einem Baukastenprinzip (Puzzle) aus den einzelnen Kernschichtelementen zusammengesetzt sein. Dadurch kann vorteilhaft das Isolierpaneel in jeder Größe anforderungsspezifisch bzw. individuell hergestellt werden.

Wie vorstehend beschrieben, ist die Kernschicht 10 durch die Deckschicht 11 ummantelt. Insbesondere ist die Kernschicht 10 im Bereich der Absätze 15 mit der Kernschicht 10 vollständig bedeckt. Dabei ist die Deckschicht 11 im Bereich der Absätze 15 formfolgend ausgebildet. Mit anderen Worten ist die Deckschicht 11 an die Form der Absätze 15 angepasst bzw. anliegend aufgebracht. Die Deckschicht 11 ummantelt die Absätze 15 formabbildend.

Die Deckschicht 11 weist an der gesamten Kernschicht 10 im Wesentlichen eine einheitliche Schichtdicke aufweist. Konkret weist die Deckschicht 11 im Bereich der Absätze 15 und im Bereich außerhalb der Absätze 15 im Wesentlichen eine einheitliche Schichtdicke auf. Es ist auch denkbar, dass die Deckschicht 11 im Bereich der Absätze 15 ein erhöhte Schichtdicke aufweist, um evtl. auftretende Kräfte verbessert in das Isolierpaneel einleiten bzw. vom Isolierpaneel ableiten zu können. Ferner ist denkbar, dass die Deckschicht 11 an weitern nicht dargestellten Bereich der Kernschicht 10 ein erhöhte Schichtdicke aufweist.

Das in Fig. 1 gezeigte Isolierpaneele wird gemäß einem erfindungsgemäßen Herstellungsverfahren wie folgt hergestellt.

In einem ersten Schritt wird eine Kernschicht 10 aus wenigstens einem wärmedämmenden, insbesondere geschäumten, Material bereitgestellt. Die Kernschicht 10 kann einteilig ausgebildet sein oder aus wenigstens zwei einzelnen Kernschichtelementen zusammengesetzt sein. Die Kernschicht 10 umfasst dabei die Absätze 15, wie vorstehend beschrieben.

Bei einer ersten Variante des Herstellungsverfahrens erfolgt in einem zweiten Schritt ein Besprühen der Kernschicht 10 mit den Absätzen 15 mit dem faserverstärkten, insbesondere glasfaserverstärkten, Kunststoffmaterial zur Bildung der Deckschichten 11. Das faserverstärkte Kunststoffmaterial wird auf Innenseite 12 und die Außenseite 13 der Kernschicht 10 aufgesprüht derart, dass die Deckschichten 11 auf der Kernschicht 10 ausgebildet werden. Das Besprühen der Innenseite 12 und der Außenseite 13 erfolgt hierbei im Wesentlichen zeitgleich.

In einem dritten Schritt wird die Kernschicht 10 mit den Deckschichten 11 verpresst. Dabei wird die Verbindungsöffnung 12 mit dem faserverstärkten Kunststoffmaterial ausgefüllt und beide gegenüber aufgetragene Deckschichten 11 miteinander stoffschlüssig verbunden. Die einzelnen Deckschichten 11 werden gleichzeitig mit der Kernschicht 10 verpresst. Beim Verpressen wird eine ebene bzw. glatte Außenoberfläche der Deckschicht 11 ausgebildet.

Bei einer zweiten, insbesondere alternativen, Variante des Herstellungsverfahrens erfolgt nach dem Bereitstellen der Kernschicht 10 das Besprühen der Innenseite 12 und der Außenseite 13 der Kernschicht 10 nacheinander. Beispielsweise wird nach dem Bereitstellen die Außenseite 13 der Kernschicht 10 mit dem faserverstärkten Kunststoffmaterial zur Bildung einer ersten Deckschicht 11 besprüht und anschließend mit der Kernschicht 10 verpresst wird. Anschließend bzw. danach wird Innenseite 12 der Kernschicht 10 mit dem faserverstärkten Kunststoffmaterial zur Bildung einer zweiten Deckschicht 11 besprüht und anschließend mit der Kernschicht 10 verpresst. Das Besprühen und Verpressen ist der Innenseite 12 bzw. der Außenseite 13 der Kernschicht 10 ist nicht auf die vorstehende Reihenfolge eingeschränkt. Mit anderen Worten kann die Innenseite 12 vor der Außenseite 13 der Kernschicht 10 besprüht und verpresst werden.

Bei einer dritten, insbesondere bevorzugten, Variante des Herstellungsverfahrens wird vor oder nach dem Bereitstellen der Kernschicht 10 eine erste Gegenseite, insbesondere eine unten angeordnete Gegenseite, einer Presse mit einem Trennmittel besprüht wird. Danach wird die erste Gegenseite der Presse mit dem faserverstärkten Kunststoffmaterial zur Bildung einer ersten Deckschicht 11 besprüht. Anschließend wird die Kernschicht 10 bzw. werden die Kernschichtelemente 14 der Kernschicht 10 mit einer ersten Seite, insbesondere der Innenseite 12 oder der Außenseite 13, auf das aufgesprühte faserverstärkte Kunststoffmaterial der ersten Gegenseite der Presse aufgelegt.

In einem weiteren Schritt wird eine zweite Seite, insbesondere die Innenseite 12 oder Außenseite 13, der aufgelegten Kernschicht 10 mit dem faserverstärkten Kunststoffmaterial zur Bildung einer zweiten Deckschicht 11 besprüht. Ferner wird eine zweite Gegenseite, insbesondere eine oben angeordnete Gegenseite, der Pressemit einem Trennmittel besprüht. Das Besprühen der zweiten Gegenseite mit dem Trennmittel kann zeitlich unabhängig von den anderen genannten Verfahrensschritten erfolgen.

Anschließend wird die Kernschicht 10 durch die Presse mit den Deckschichten 11 verpresst. Dabei wird die Deckschicht 10 im Bereich der Absätze 15 vollständig ausgebildet. Beim Verpressen wird einheitliche Schichtdicke der Deckschicht 10, insbesondere im Bereich der Absätze 15 ausgebildet.

### Bezugszeichenliste

- 10: Kernschicht
- 11: Deckschicht
- 12: Innenseite
- 13: Außenseite
- 14: Schmalseite
- 14a: oben angeordnete Schmalseite
- 14b: unten angeordnete Schmalseite
- 15: Absatz
- 15a: oberer Absatz
- 15b: unterer Absatz
- 16: Tiefe
- 17: Außenfläche

## Patentansprüche

1. Isolierpaneel für einen Fahrzeugaufbau, insbesondere Kühlfahrzeugaufbau, mit wenigstens einer wärmedämmenden Kernschicht (10) und wenigstens einer Deckschicht (11) aus einem faserverstärkten Kunststoffmaterial, wobei die Kernschicht (10) eine Innenseite (12), eine Außenseite (13) und wenigstens zwei gegenüberliegende Schmalseiten (14) aufweist,
**dadurch gekennzeichnet, dass**
die Kernschicht (10) auf der Innenseite (12) und/oder auf der Außenseite (13) wenigstens zwei Absätze (15) umfasst, wobei jeweils ein Absatz (15) ausgehend von einer Schmalseite (14) ausgebildet ist, und wobei die Kernschicht (10), insbesondere im Bereich der Absätze (15), mit der Deckschicht (11) bedeckt ist.

2. Isolierpaneel nach Anspruch 1,
**dadurch gekennzeichnet, dass**
die Absätze (15) in Einbaulage einen oberen Absatz (15a) und einen unteren Absatz (15b) bilden, die in einer Vertikalrichtung an der Kernschicht (10) einander gegenüber vorgesehen sind und die in Längsrichtung des Isolierpaneels verlaufen.

3. Isolierpaneel nach Anspruch 1 oder 2,
**dadurch gekennzeichnet, dass**
die Absätze (15) auf der Innenseite (12) und/oder die Absätze (15) auf der Außenseite (13) eine gleiche Tiefe (16) aufweisen.

4. Isolierpaneel nach einem der vorhergehenden Ansprüche,
**dadurch gekennzeichnet, dass**
die Deckschicht (11) im Bereich des jeweiligen Absatzes (15) formfolgend ausgebildet ist.

5. Isolierpaneel nach einem der vorhergehenden Ansprüche,
**dadurch gekennzeichnet, dass**
die Deckschicht (11) die Absätze (15) vollständig bedeckt und an der gesamten Kernschicht (10) eine einheitliche Schichtdicke aufweist.

6. Isolierpaneel nach einem der vorhergehenden Ansprüche,
**dadurch gekennzeichnet, dass**
wenigstens ein Befestigungsmittel und/oder wenigstens eine Blende im Bereich des jeweiligen Absatzes (15) vorgesehen ist.

7. Isolierpaneel nach Anspruch 6,
**dadurch gekennzeichnet, dass**
das Befestigungsmittel und/oder die Blende mit einer Außenfläche (17) des Isolierpaneels zumindest teilweise flächenbündig abschließt.

8. Isolierpaneel nach Anspruch 6,
**dadurch gekennzeichnet, dass**
das Befestigungsmittel und/oder die Blende von einer Außenfläche (17) des Isolierpaneels ausgehend nach innen versetzt angeordnet ist.

9. Komponente eines Fahrzeugaufbaus, insbesondere Kühlfahrzeugaufbaus, umfassend eine Hecktüre und/oder eine Seitenwand und/oder eine Vorderwand und/oder eine Decke und/oder ein Boden jeweils mit wenigstens einem Isolierpaneel nach Anspruch 1.

10. Fahrzeugaufbau, insbesondere Kühlfahrzeugaufbau, mit wenigstens zwei Seitenwänden, einem Boden und einer Decke, wobei wenigstens eine der Seitenwände und/oder der Boden und/oder die Decke durch wenigstens ein Isolierpaneel nach Anspruch 1 gebildet sind.

11. Fahrzeugaufbau nach Anspruch 10,
**dadurch gekennzeichnet, dass**
die Decke durch wenigstens ein Deckenpaneel und der Boden durch wenigstens ein Bodenpaneel gebildet ist, wobei das Deckenpaneel und das Bodenpaneel bei gleichbleibender Gesamtbreite des Fahrzeugaufbaus unabhängig von einer Dicke der jeweiligen Seitenwand ein gleiches Breitenmaß aufweisen.

12. Fahrzeugaufbau nach Anspruch 10 oder 11,
**dadurch gekennzeichnet, dass**
wenigstens ein Eckbereich zwischen dem Boden und der jeweiligen Seitenwand und/oder der Decke und der jeweiligen Seitenwand ausgebildet ist, in dem wenigstens ein Befestigungsmittel und/oder wenigstens eine Blende angeordnet ist, das/die mit einer Außenfläche (17) des jeweiligen Isolierpaneels zumindest teilweise flächenbündig abschließt.

13. Fahrzeugaufbau nach einem der Ansprüche 10 bis 12,
**dadurch gekennzeichnet, dass**
wenigstens ein Eckbereich zwischen dem Boden und der jeweiligen Seitenwand und/oder der Decke und der jeweiligen Seitenwand ausgebildet ist, in dem wenigstens ein Befestigungsmittel und/oder wenigstens eine Blende angeordnet ist, das/die von einer Außenfläche (17) des jeweiligen Isolierpaneels ausgehend nach innen versetzt angeordnet ist.

14. Fahrzeug, insbesondere Kühlfahrzeug, mit wenigstens einem Isolierpaneel nach Anspruch 1.

15. Verfahren zur Herstellung eines Isolierpaneels nach einem der vorhergehenden Ansprüche, mit den folgenden Schritten:
- Bereitstellen einer Kernschicht (10) aus wenigstens einem wärmedämmenden, insbesondere geschäumten, Material, wobei die Kernschicht (10) an wenigstens einer Schmalseite wenigstens einen Absatz (15) aufweist, der von der Schmalseite ausgehend ausgebildet ist;
- Besprühen einer Presse und/oder der Kernschicht (10) und des Absatzes (15) mit einem faserverstärkten, insbesondere glasfaserverstärkten, Kunststoffmaterial zur Bildung wenigstens einer Deckschicht (11); und
- Verpressen der Kernschicht (10) mit der Deckschicht (11), wobei der Absatz (15) mit dem faserverstärkten Kunststoffmaterial bedeckt wird.

16. Verfahren nach Anspruch 15,
**dadurch gekennzeichnet, dass**
beim Verpressen im Bereich der Absätze (15) eine einheitliche Schichtdicke der Deckschicht (11) ausgebildet wird.
